# EUROPEAN PATENT APPLICATION

(11) **EP 1 780 441 A2**
(43) Date of publication of application: **02.05.2007**
(21) Application number: 06122889.6
(22) Date of filing: 25.10.2006
(51) Int. Cl.: F16F 15/02, B60K 5/12

(54) **Product designing system and method, and computer-readable recording medium having product designing program recorded thereon**

(30) Priority: 28.10.2005 JP 2005314433; 15.11.2005 JP 2005330295; 15.11.2005 JP 2005330296
(71) Applicant: Mazda Motor Corporation, Aki-gun, Hiroshima 730-8670 (JP)
(72) Inventor: Nagao, Kuniaki, Aki-gun, Hiroshima 730-8670 (JP); Uesugi, Naohisa, Aki-gun, Hiroshima 730-8670 (JP); Miwade, Hiromi, Aki-gun, Hiroshima 730-8670 (JP); Uchida, Hiroshi, Aki-gun, Hiroshima 730-8670 (JP)
(74) Representative: Laufhütte, Dieter

(57) **Abstract**

Disclosed is a product designing system for designing a given product while setting a design parameter value for each of a plurality of design parameters of the product each contributing to noise and vibration characteristics of an installation base for the product. The system comprises vibration-system setting means for setting a plurality of vibration systems related, respectively, to the noise and vibration characteristics, and formed as at least one vibration system pair inducing a coupled phenomenon that they vibrate while exchanging energy therebetween, coupled-degree calculation means for calculating a coupled degree representing a degree of the coupled phenomenon between respective vibrations in the vibration system pair set by the vibration-system setting means, and design-parameter setting means for setting a plurality of design parameters of the product contributing to the noise and vibration characteristics, and setting a design parameter value for each of the design parameters in such a manner as to reflect the coupled degree calculated by the coupled-degree calculation means thereto.

## Description

### BACKGROUND OF THE INVENTION

### 1. Field of the Invention

The present invention relates to a product designing system and method, and a computer- readable recording medium having a product designing program recorded thereon.

### 2. Description of the Related Art

As is well known, in engines, turning forces given to an engine crankshaft with a cyclic variation and corresponding reaction forces, and inertial forces of reciprocating engine-components, such as a piston and a connecting rod, are like to partially remain without counterbalancing each other. An engine mount is provided as a component for supportingly mounting an engine thereon while preventing vibrations of an engine body caused by such uncancelled forces from being transmitted to a vehicle body, and reducing/attenuating a pitching motion during acceleration/deceleration and a rolling motion during turning. Typically, an engine mount is designed such that an elastic body, such as rubber, is disposed between a pair of mounting members to be fixed, respectively, to an engine and a vehicle body, to absorb/damp vibrations based on deformation and internal friction of the elastic body.

In a design process of such an engine mount, with a view to achieving excellent performance in various characteristics of a vehicle body as an installation base therefor, such as an idling vibration characteristic, an acceleration shock characteristic, a vehicle acceleration noise characteristic, and an engine-operation insusceptibility (i.e., insusceptibility to engine torque variation, or resistance to vehicle-body displacement to be caused by engine torque variation), a design parameter value for each of a plurality of design parameters contributing to these characteristics is required to be adequately set. For example, as a conventional technique related to this need, Japanese Patent Laid-Open Publication No. 11-11159 discloses a structure intended technique of setting an installation position of an engine mount while balancing all of the idling vibration characteristic, the engine-operation insusceptibility and design flexibility. In this technique, either one of an engine-mount installation position and an engine-mount rigidity as design parameters is varied to achieve an adequate balance between the idling vibration characteristic and the engine-operation insusceptibility.

Particularly, in an operation of setting a design parameter value for each of the design parameters contributing noise and vibration characteristics to suppress noise/vibration possibly occurring in a vehicle body, it is desirable to take account of a pitching vibration system producing a pitching vibration about an axis in a width or lateral direction of the vehicle body (lateral axis), and a rolling vibration system producing a rolling vibration about an engine crankshaft, as factors causing deterioration in noise and vibration characteristics of the vehicle body. In addition, it is desirable to take account of a vertical vibration system producing a vertical vibration (so-called "shaking") in a vertical direction of the vehicle body, i.e., a vibration due to a drive shaft affected by an imbalance between tires. In a vibration system pair of the pitching vibration system and the rolling vibration system, and a vibration system pair of the pitching vibration system and the vertical vibration system, the two vibration systems in each of the vibration system pairs are in relation of inducing a coupled phenomenon that they interact with each other while exchanging energy therebetween. If the degree of the coupled phenomenon between the two vibration systems in each of the vibration system pairs (this degree will hereinafter be referred to as "coupled degree") becomes higher, the noise/vibration characteristics will be deteriorated. In order to cope with this problem, even if vibration only in either one of the vibration systems inducing the coupled phenomenon in each of the vibration system pairs can be suppressed, deterioration of the noise/vibration characteristics cannot be always effectively prevented. Improvement of the noise/vibration characteristics requires reducing the coupled degree between the interacting vibration systems.

In design/development processes of an engine mount, there are a plurality of design parameters to be matched with each other. Moreover, if the possibility of the mutual influence between the design parameters is also taken into consideration, the matching operation itself will be complicated, and an enormous amount of testing time will be needed in some cases. Late years, in order to perform such experimental tests/evaluations accurately and efficiently, the Taguchi method known as a technique capable of reducing variations from a design stage to achieve stable quality has been increasingly widely used as measures against variations in a product, such as use conditions, internal degradation and manufacturing error. For example, Japanese Patent Laid-Open Publication No. 2002-322938 discloses a technique of performing an experimental test on combustion characteristics of an internal combustion engine using the Taguchi method.

In cases where the Taguchi method is used in design/development processes of an engine mount, a design parameter value for each of a plurality of design parameters contributing to a plurality of engine-mount performances is set, for example, to improve noise/vibration characteristics related to each of the idling vibration characteristic, the acceleration shock characteristic, the vehicle acceleration noise characteristic, etc., and a plurality of level values are assigned to each of the design parameters. Then, in a conventional technique, these design parameters and level values are allocated in an orthogonal table, and a performance value is iteratively calculated with respect to each of the level values in each of the design parameters to create a factorial effect diagram having a vertical axis indicative of the calculated performance values. Subsequently, based on the factorial effect diagram, an optimal one of the level values is selected as a design parameter value for the design parameter.

In reality, an interaction is apt to occur between the different characteristics. Specifically, in each of the design parameters, when one of the characteristics is improved, one or more of the remaining characteristics are deteriorated. For example, if the idling vibration characteristic is improved, the acceleration shock characteristic will be deteriorated. Consequently, even if the factorial effect diagram for comparing respective performance values calculated based on the level values is created, variation in the interaction between the different characteristics makes it difficult to select one of the level values as a design parameter value for the design parameter achieving an adequate balance between the different characteristics, to cause a problem of extended time required for the selection.

### SUMMARY OF THE INVENTION

It is an object of the present invention to provide a product designing system and method, and a computer-readable recording medium having a product designing program recorded thereon, capable of improving noise and vibration characteristics of an apparatus body as an installation base for a product, while reducing a coupled degree between vibrations produced by at least a pair of vibration systems.

It is another object of the present invention to provide a product designing system and method, and a computer-readable recording medium having a product designing program recorded thereon, capable of readily and efficiently selecting a design parameter value allowing a plurality of noise and vibration characteristics to be balanced against each other, while taking account of an interaction between the characteristics.

According to a first aspect of the present invention, there is provided a product designing system for designing a given product while setting a design parameter value for each of a plurality of design parameters of the product each contributing to noise and vibration characteristics of an installation base for the product. This system comprises vibration-system setting means for setting a plurality of vibration systems related, respectively, to the noise and vibration characteristics, and formed as at least one vibration system pair inducing a coupled phenomenon that they vibrate while exchanging energy therebetween, coupled-degree calculation means for calculating a coupled degree representing a degree of the coupled phenomenon between respective vibrations in the vibration system pair set by the vibration-system setting means, and design-parameter setting means for setting a plurality of design parameters of the product contributing to the noise and vibration characteristics, and setting a design parameter value for each of the design parameters in such a manner as to reflect the coupled degree calculated by the coupled-degree calculation means thereto.

In the above product designing system of the present invention, a design parameter value for each of the design parameters of the product is set by reflecting the coupled degree between respective vibrations in the at least one vibration system pair related to the noise and vibration characteristics. Thus, the design parameter value can be set to reduce the coupled degree so as to further desirably improve the noise and vibration characteristics.

The design-parameter setting means may be adapted to set the design parameter value in such a manner as to correspond to a minimum one of a plurality of coupled degrees calculated by the coupled-degree calculation means.

The design-parameter setting means may be adapted to set the design parameter value in such a manner as to fall with a given range. This makes it possible to eliminate inadequate design parameter values so as to further reliably improve the noise and vibration characteristics.

The design-parameter setting means may be adapted to set the design parameter value in such a manner as to correspond to a coupled-degree value less than a predetermined target coupled-degree value of the coupled degree between respective vibrations in the vibration system pair. This makes it possible to further reliably improve the noise and vibration characteristics.

The target coupled-degree value may be subjected to a frequency-dependent weighting. This makes it possible to further efficiently improve the noise and vibration characteristics while taking account of parameters of the noise and vibration characteristics.

The target coupled-degree value may be determined with a higher weighting in a given frequency range. This makes it possible to further efficiently and reliably improve the noise and vibration characteristics while taking account of parameters of the noise and vibration characteristics.

When the product is an engine mount for supportingly mounting an engine thereon relative to a vehicle body, the vibration-system setting means may be adapted to set, as the vibration systems to be formed as a plurality of the vibration system pairs each inducing the coupled phenomenon, a pitching vibration system producing a pitching vibration about an axis in a lateral direction of the vehicle body, a rolling vibration system paired with the pitching vibration system to produce a rolling vibration about an engine crankshaft, and a vertical vibration system paired with the pitching vibration system to produce a vertical vibration in a vertical direction of the vehicle body. Thus, in a process of designing the engine mount, the design parameter value can be set by reflecting a coupled degree between the pitching vibration about an axis in a lateral direction of the vehicle body and the rolling vibration about an engine crankshaft, and a coupled degree between the pitching vibration and the vertical vibration in a vertical direction of the vehicle body, so as to reduce each of the coupled degrees to improve the noise and vibration characteristics.

The noise and vibration characteristics may consist of an idling vibration characteristic, an acceleration shock characteristic, a vehicle acceleration noise characteristic and a shaking characteristic. This makes it possible to provide an enhanced engine-mount performance related to each of the idling vibration characteristic, the acceleration shock characteristic, the vehicle acceleration noise characteristic and the shaking characteristic.

The design parameters may consist of a spring constant, a fixing position and an inclination angle of the engine mount. This makes it possible to effectively suppress noise/vibration.

When the product is an engine mount for supportingly mounting an engine thereon relative to a vehicle body, the vibration-system setting means may be adapted to set, as the vibration systems to be formed as a plurality of the vibration system pairs each inducing the coupled phenomenon, a pitching vibration system producing a pitching vibration about an axis in a lateral direction of the vehicle body, and a rolling vibration system paired with the pitching vibration system to produce a rolling vibration about an engine crankshaft. Thus, in a process of designing the engine mount, the design parameter value can be set by reflecting a coupled degree between the pitching vibration about an axis in a lateral direction of the vehicle body and the rolling vibration about an engine crankshaft, so as to reduce the coupled degree to improve the noise and vibration characteristics.

In this case, the noise and vibration characteristics may consist of an idling vibration characteristic, an acceleration shock characteristic and a vehicle acceleration noise characteristic. Further, the design parameters may consist of a spring constant, a fixing position and an inclination angle of the engine mount.

The product designing system set forth in the first aspect of the present invention may further include level-value assignment means for assigning a plurality of level values to each of the design parameters set by the design-parameter setting means, allocation means for allocating the design parameters set by the design-parameter setting means and the level values assigned by the level-value assignment means, into a given orthogonal table, performance-value calculating means for calculating a performance value for each of the characteristics, with respect to each of the level values in each of the design parameters, according to the orthogonal table having the design parameters and the level values allocated therein by the allocation means, interaction-level calculation means for calculating a level of interaction between two or more of the characteristics related to each of the design parameters, and representation-format change means for changing a representation format to be represented on a factorial effect diagram having a vertical axis indicative of the performance values calculated with respect to each of the level values in each of the design parameters, in such a manner as to reflect the characteristic interaction level calculated by the interaction-level calculation means. Thus, the representation format on the factorial effect diagram can be changed by reflecting the level of interaction between the characteristics. This makes it possible to readily distinguish whether each of the design parameter values is adequate or inadequate, so that a system operator, such as an engineer, can select a design parameter value allowing the plurality of characteristics to be balanced against each other, quickly and efficiently.

Further, the representation-format change means may be operable, when the characteristic interaction level in specific one or more of the design parameters exceeds a given threshold, to preclude the performance value for each of the level values in each of the specific design parameters from being represented on the factorial effect diagram. Alternatively, the representation-format change means may be operable, when the characteristic interaction level in specific one or more of the design parameters exceeds a given threshold, to allow the performance value for each of the level values in each of the specific design parameters to be represented on the factorial effect diagram in a representation format different from that of the performance value for each of the design parameters in the remaining design parameters. This makes it possible to readily distinguish whether each of the design parameter values is adequate or inadequate, so that a system operator, such as an engineer, can select a design parameter value allowing the plurality of characteristics to be balanced against each other, quickly and efficiently.

The threshold of the characteristic interaction level may be set for each of a plurality of combinations of the characteristics. This allows a system operator, such as an engineer, to select a design parameter value allowing the plurality of characteristics to be balanced against each other, quickly and efficiently, while taking account of importance of the respective characteristics.

The representation-format change means may be adapted to subject the performance value for each of the level values in each of the design parameters to a weighting using a weighting factor which decreases along with an increase in the level of interaction between the characteristics related to the design parameter. This makes it possible to readily distinguish whether each of the design parameter values is adequate or inadequate, so that a system operator, such as an engineer, can select a design parameter value allowing the plurality of characteristics to be balanced against each other, quickly and efficiently.

Alternatively, the representation-format change means may be adapted to subject the performance value for each of the level values in each of the design parameters to a weighting using a weighting factor dependent on importance of the respective characteristics. This makes it possible to readily distinguish whether each of the design parameter values is adequate or inadequate, so that a system operator, such as an engineer, can select a design parameter value allowing the plurality of characteristics to be balanced against each other, quickly and efficiently.

Further, the representation-format change means may be adapted to subject the performance value for each of the level values in each of the design parameters to a weighting using a product of a weighting factor which decreases along with an increase in the level of interaction between the characteristics related to the design parameter, and a weighting factor dependent on importance of the respective characteristics. This makes it possible to readily distinguish whether each of the design parameter values is adequate or inadequate, so that a system operator, such as an engineer, can select a design parameter value allowing the plurality of characteristics to be balanced against each other, quickly and efficiently.

According to a second aspect of the present invention, there is provided a product designing method for use in a product designing system for designing a given product while setting a design parameter value for each of a plurality of design parameters of the product each contributing to noise and vibration characteristics of an installation base for the product. This method comprises setting a plurality of vibration systems related, respectively, to the noise and vibration characteristics, and formed as at least one vibration system pair inducing a coupled phenomenon that they vibrate while exchanging energy therebetween, calculating a coupled degree representing a degree of the coupled phenomenon between respective vibrations in the set vibration system pair, and setting a plurality of design parameters of the product contributing to the noise and vibration characteristics, and setting a design parameter value for each of the design parameters in such a manner as to reflect the calculated coupled degree thereto.

According to a third aspect of the present invention, there is provided a computer-readable recording medium having recorded thereon a product designing program for allowing a product designing system for designing a given product while setting a design parameter value for each of a plurality of design parameters of the product each contributing to noise and vibration characteristics of an installation base for the product, to execute procedures comprising setting a plurality of vibration systems related, respectively, to the noise and vibration characteristics, and formed as at least one vibration system pair inducing a coupled phenomenon that they vibrate while exchanging energy therebetween, calculating a coupled degree representing a degree of the coupled phenomenon between respective vibrations in the set vibration system pair, and setting a plurality of design parameters of the product contributing to the noise and vibration characteristics, and setting a design parameter value for each of the design parameters in such a manner as to reflect the calculated coupled degree thereto.

### BRIEF DESCRIPTION OF THE DRAWINGS

FIG. 1 is a block diagram showing the configuration of a product designing system according a first embodiment of the present invention.
FIG. 2A is a side view of an engine mount.
FIG. 2B is a top plan view of the engine mount.
FIG. 2C is a back view of the engine mount.
FIG. 3 is an explanatory diagram of a coupled phenomenon between pitching/rolling vibrations.
FIG. 4 is a flowchart showing a main routine of a product design process to be executed in the product designing system while taking account of the coupled phenomenon between the pitching/rolling vibrations.
FIG. 5 is a table showing a plurality of design parameters of a product which contribute to noise/vibration characteristics, and three level values assigned to each of the design parameters.
FIG. 6 is a flowchart showing a factorial effect calculation subroutine in the first embodiment, which corresponds to Step S16 illustrated in FIG. 4.
FIG. 7 is a factorial effect diagram to be created according to the factorial effect calculation subroutine.
FIG. 8 is a graph showing a frequency characteristic of a pitching/rolling coupled degree.
FIG. 9 is a flowchart showing a factorial effect calculation subroutine in a product designing system according a second embodiment of the present invention, which corresponds to Step S16 illustrated in FIG. 4, but differ from that illustrated in FIG. 6.
FIG. 10 is a graph showing a frequency characteristic of a pitching/rolling coupled degree.
FIG. 11 is an explanatory diagram of respective coupled phenomenons between pitching/rolling vibrations and between pitching/vertical vibrations.
FIG. 12 is a flowchart showing a factorial effect calculation subroutine in the second embodiment, which corresponds to Step S16 illustrated in FIG. 4.
FIG. 13 is a factorial effect diagram to be created according to the factorial effect calculation subroutine in FIG. 12.
FIG. 14 is a graph showing a frequency characteristic of a pitching/vertical coupled degree.
FIG. 15 is a flowchart showing a factorial effect calculation subroutine in the second embodiment, which corresponds to Step S16 illustrated in FIG. 4, but differ from that illustrated in FIG. 12.
FIG. 16 is a flowchart showing a main routine of a product design process to be executed in the product designing system according to the second embodiment.
FIG. 17 is a table showing a plurality of design parameters of the product related to the noise/vibration characteristics, and three level values assigned to each of the design parameters.
FIG. 18 is a factorial effect diagram to be created based on a factorial effect calculation in Step S86 illustrated in FIG. 16.
FIG. 19 is an analysis chart showing a variance representing a characteristic interaction in each of the design parameters.
FIG. 20 is a first example of a factorial effect diagram based on corrected factorial-effect-diagram representation data in Step S88 illustrated in FIG. 16.
FIG. 21 is a second example of the factorial effect diagram based on the corrected factorial-effect-diagram display data in Step S88 illustrated in FIG. 16.
FIG. 22 is a flowchart showing a factorial-effect-diagram display subroutine for creating the first and second examples of the factorial effect diagram illustrated in FIGS. 20 and 21, which corresponds to Step S88 illustrated in FIG. 16.
FIG. 23 is a third example of the factorial effect diagram based on the corrected factorial-effect-diagram representation data in Step S88 illustrated in FIG. 16.
FIG. 24 is a flowchart showing a factorial-effect-diagram display subroutine for creating the third example of the factorial effect diagram illustrated in FIG. 23, which corresponds to Step S88 illustrated in FIG. 16.
FIG. 25 is a fourth example of the factorial effect diagram based on the corrected factorial-effect-diagram representation data in Step S88 illustrated in FIG 16.
FIG. 26 is a flowchart showing a factorial-effect-diagram display subroutine for creating the fourth example of the factorial effect diagram illustrated in FIG. 25, which corresponds to Step S88 illustrated in FIG. 16.

### DESCRIPTION OF THE PREFERRED EMBODIMENTS

With reference to the accompanying drawings, an embodiment of the present invention will now be described.

### (FIRST EMBODIMENT)

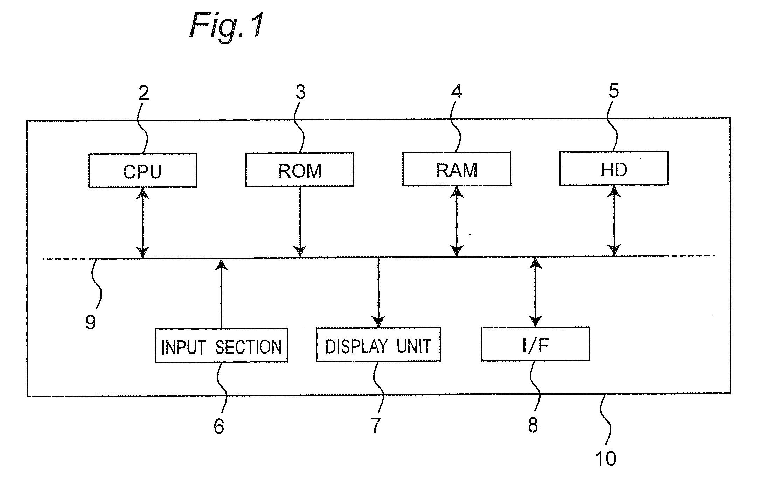

FIG. 1 is a block diagram showing the configuration of a product designing system according a first embodiment of the present invention. In the first embodiment, the product designing system 10 is made up of a personal computer to be operated according to a given program. Fundamentally, the product designing system 10 comprises a CPU 2 for controlling each component of the system 10 such that it executes various instructions according to a given program, a ROM 3 for storing a boot program to be executed during boot of the system 10, a ROM 4 for use as a working buffer space necessary for executing programs, a hard disk ("HD" in FIG. 1) 5 for storing OS, application programs and various data, an input section 6, such as a keyboard, a display unit 7 composed of a GUI liquid-crystal display for GUI, and an interface ("I/F" in FIG. 1) 8 for interfacing various data communications with the outside. These components are connected to each other via an internal bas 9.

As one of the application programs, a product designing program is stored on the hard disk 5 to design a product while testing and evaluating the product. Based on a user's setting/input through the input section 6, the CPC 2 is operable to perform various calculations based on the conventional Taguchi method according to the product designing program so as to appropriately set a design parameter value for each of a plurality of design parameters related to product performances of a product as a design target.

While the product designing system according to the first embodiment is made up of a note-type or all-in-one desktop-type personal computer, the present invention is not limited to such a type. For example, hardware devices corresponding to the components illustrated in FIG. 1 may be provided separately, and electrically connected to each other to form the product designing system.

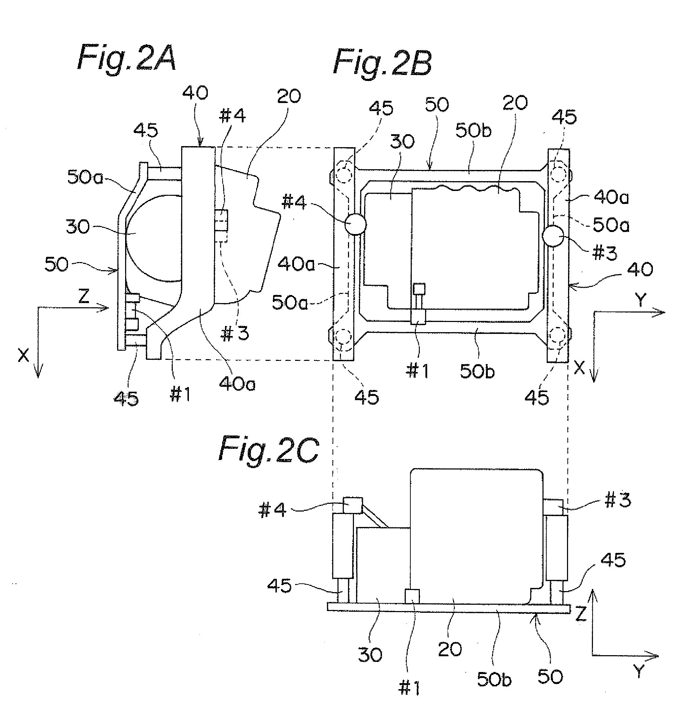

FIGS. 2A to 2C are, respectively, a side view, a top plan view and a back view schematically showing an engine support structure for supporting an engine through an engine mount. In the first embodiment, a pendulum type is employed as an engine support type of the engine support structure, and the engine 20 is supported by three points through three #1, #3 and #4 engine mounts.

The "# plus number" attached to distinguish the engine mounts from each other is used in common among all engine support types including the pendulum type. For example, "#2", which is not used in the pendulum type, represents an engine mount of a torque roll axis type which is arranged on a front side of an engine.

More specifically, in the pendulum type, the engine 20 and a transmission 30 are hung by the #3 and #4 engine mounts fixedly attached to a frame assembly surrounding the engine 20 and the transmission 30, on respective extensions of laterally opposite ends of a crankshaft of the engine 20 or in the vicinity thereof, and a longitudinal (frontward/reamard) movement of the engine 20 and the transmission 30 is restricted by the #1 engine mount fixedly attached as a stopper to the frame assembly on a rearward and under side of the engine 20.

As shown in FIGS. 2A and 2C, the frame assembly comprises a main frame 40, and a sub frame 50 disposed below the main frame 40 to support a front suspension (not shown). The main frame 40 includes a pair of right and left main side members 40a, 40a located on laterally opposite sides in a front zone of a vehicle body to extend in a longitudinal direction of the vehicle body, and two main cross members (not shown) each disposed to extend in a width or lateral direction of the vehicle body and connect front ends or rear ends of the main side frames 40a, 40a to each other. The sub frame 50 includes a pair of right and left sub side members 50a, 50a disposed, respectively, blow the right and left side members 40a, 40a of the main frame 40 on laterally opposite sides in the front zone of the vehicle body, to extend in the longitudinal direction of the vehicle body, and two sub cross members 50b, 50b each disposed to extend in the lateral direction of the vehicle body and connect front ends or rear ends of the sub side frames 50a, 50a to each other. The main frame 40 and the sub frame 50 are coupled to each other by four support members 45 interposed between these frames 40, 50 to pass respectively, through four intersections of the sub side members 50a, 50a and the sub cross members 50b, 50b. Each of the support members 45 has a structure for providing enhanced load noise and harshness characteristics, and a damping function.

The following description will be made by taking one example where a product design process of designing the #1, #3 and #4 engine mounts for supporting the engine 20 and the transmission 30 in a pendulum fashion is performed based on the product designing system 10 as shown in FIG. 1. In this design process for the #1, #3 and #4 engine mounts based on the product designing system 10, a plurality of design parameters of the #1, #3 and #4 engine mounts related to noise/vibration characteristics are set up. In the first embodiment, the following three characteristics are taken into account as noise/vibration characteristics: an idling vibration characteristic indicative of vehicle-body vibration caused by engine vibration during idling; an acceleration shock characteristic indicative of floor vibration in longitudinal direction during acceleration; and a vehicle acceleration noise occurring during acceleration.

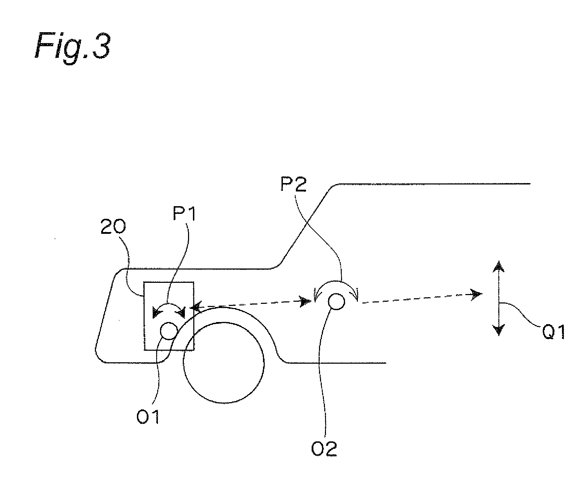

As mentioned above, in the vehicle body, it is known that a factor causing deterioration in performance of the #1, #3 and #4 engine mounts related to the noise/vibration characteristics includes a vibration system producing a pitching vibration about an axis in the lateral direction of the vehicle body, and a vibration system producing a rolling vibration about an engine crankshaft, and respective vibrations in the two vibration systems are in relation of inducing a coupled phenomenon that they interact with each other while exchanging energy therebetween. FIG. 3 is an explanatory diagram of the pitching vibration and the rolling vibration causing a coupled phenomenon. As shown in FIG. 3, the rolling vibration P1 about the crankshaft 01 of the engine 20 and the pitching vibration P2 about a lateral axis 02 interact with each other while exchanging energy therebetween. Along with an increase in a degree of the coupled phenomenon (hereinafter referred to as "pitching/rolling coupled degree"), a vertical vibration Q1 of the vehicle body will become larger, and the noise/vibration characteristics will be deteriorated. From this point of view, in the first embodiment, a design parameter value for each of the design parameters of the #1, #3 and #4 engine mounts related to the noise/vibration characteristics will be set while taking account of the pitching/rolling coupled degree.

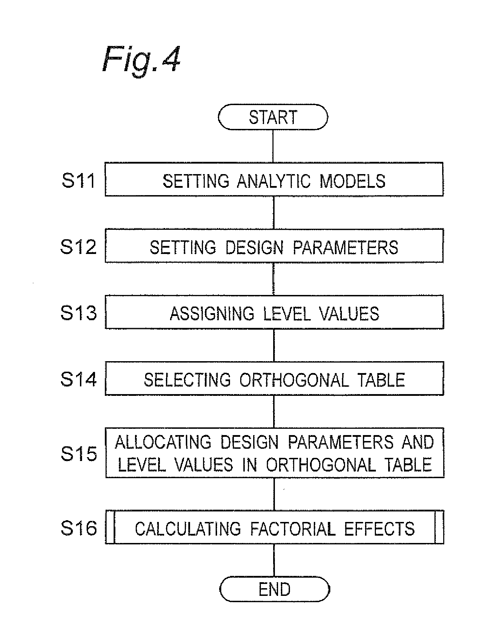

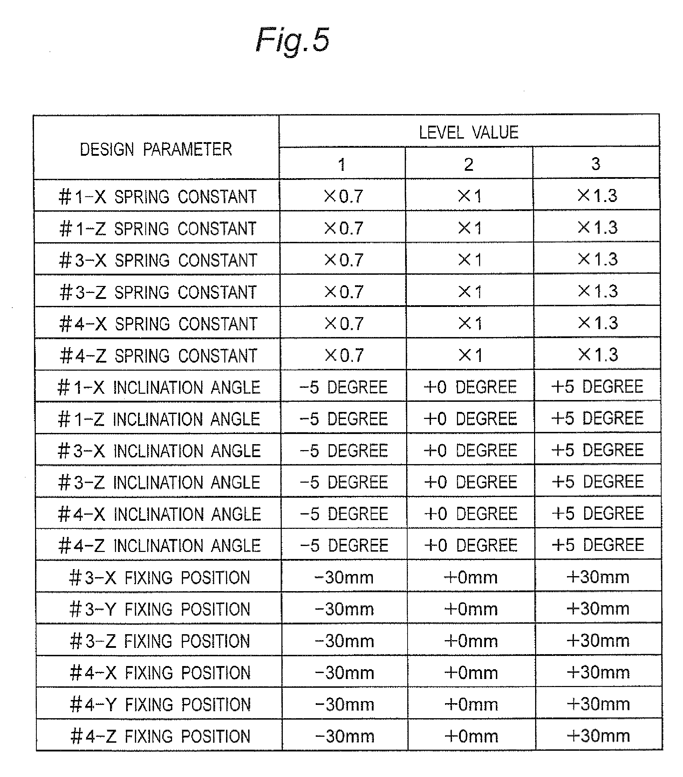

FIG. 4 is a flowchart showing a main routine of a product design process to be executed in the product designing system 10 while taking account of the pitching/rolling coupled degree. In this process, an analytic model (in the first embodiment, the #1, #3 and #4 engine mounts) is firstly set according to an input of a system operator, such as an engineer (S11). Then, a plurality of design parameters of the #1, #3 and #4 engine mounts contributing to the noise/vibration characteristics are set up (S12), and a plurality (in the first embodiment, three) are assigned to each of the design parameters (S13). The design parameters and the level values to be set and assigned in S12 and S13 will also be described later with reference to FIG. 5.

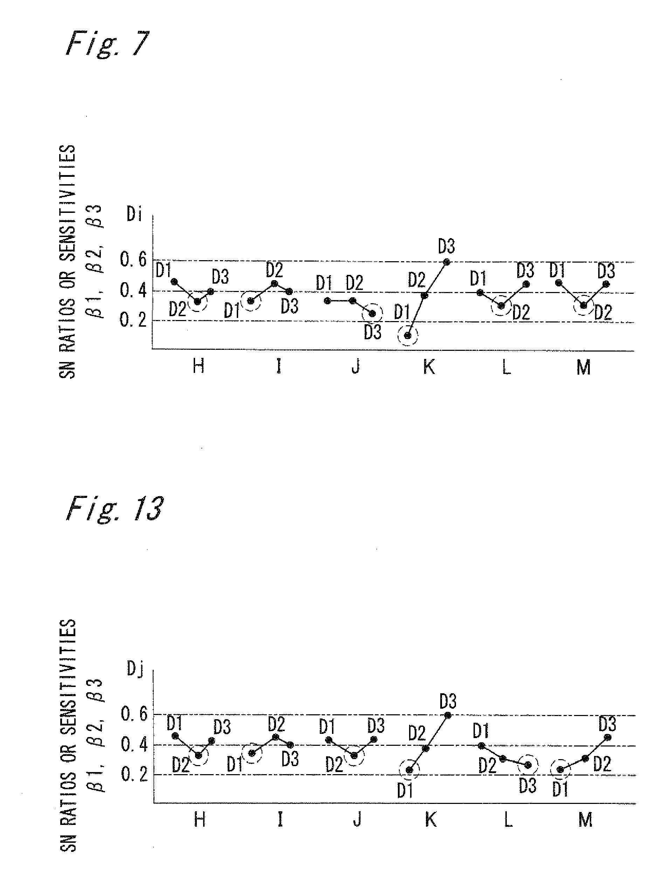

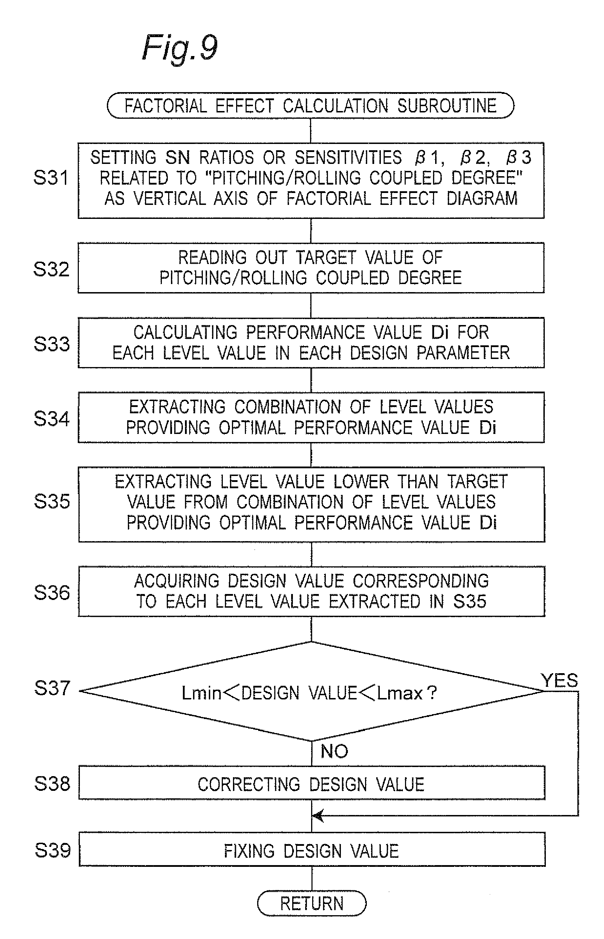

After Step S13, an orthogonal table based on the Taguchi method is selected (S14). In the first embodiment, an L54 orthogonal table is selected. Subsequently, the design parameters and the level values set and assigned in S12 and S13 are allocated in the orthogonal table (S15). Then, an analysis of L54 × L54 where all of the design parameters have errors is performed to calculate factorial effects (S16). This factorial effect calculation subroutine will be specifically described later with reference to FIGS. 7 and 9. After the above operations, the product design process will be completed.

FIG. 5 is a table showing the plurality of design parameters related to the noise and vibration characteristics, and the level values assigned to each of the design parameters. In the first embodiment, as a design parameter having a relation to the noise and vibration characteristics and a contribution to the pitching/rolling coupled degree, the following total eighteen factors are set up: a spring constant in X, Z directions of the #1, #3 and #4 engine mounts [3 (the number of engine mounts) × 2 (the number of directions) = 6 (total number of spring constants)], an inclination angle in X, Z directions of the #1, #3 and #4 engine mounts [3 (the number of engine mounts) × 2 (the number of directions) = 6 (total number of inclination angles)] and a fixing position in X, Y Z directions of the #3 and #4 engine mounts [2 (the number of engine mounts) × 3 (the number of directions) = 6 (total number of fixing positions)]. Further, three level values 1 to 3 are set to each of these design parameters. The above X, Y, Z directions correspond, respectively, to directions indicated in FIGS. 2A to 2C.

More specifically, the level value 2 is a standard value in the level values 1 to 3, and the level value 1 and the level value 3 are, respectively, a smaller value and a larger value than the standard value. For example, as for the spring constants in X, Z directions of the #1, #3 and #4 engine mounts, "× 1" is set as the level value 2, and "x 0.7" and "x 1.3" are set, respectively, as the level value 1 and the level value 3. Further, as for the inclination angles in X, Z directions of the #1, #3 and #4 engine mounts, "+ 0 (zero) degree" is set as the level value 2, and "- 5 degree" and "+ 5 degree" are set, respectively, as the level value 1 and the level value 3. Furthermore, as for the fixing positions in X, Y Z directions of the #3 and #4 engine mounts, "+ 0 (zero) mm" is set as the level value 2, and "- 30 mm" and "+ 30 mm" are set, respectively, as the level value 1 and the level value 3.

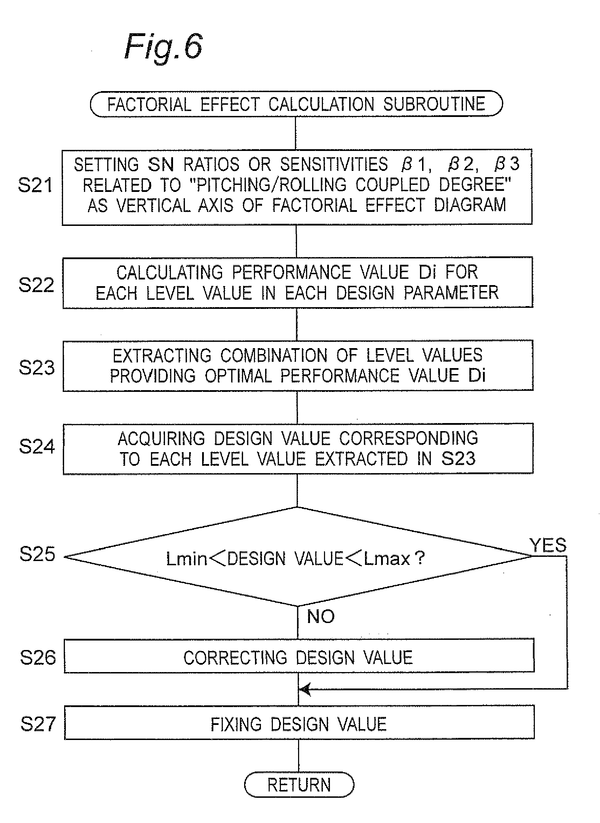

The design parameters and the level values associated with each other as shown in FIG. 5 are allocated in the orthogonal table. Based on this orthogonal table, a calculation is iteratively performed to obtain factorial effects. FIG. 6 is a flowchart showing a factorial effect calculation subroutine of Step S16 illustrated in FIG. 4. In this subroutine, SN ratios or sensitivities β1, β2, β3 related to the pitching/rolling coupled degree are set as the vertical axis of the factorial effect diagram (S21). Then, based on the orthogonal table having design parameters and the level values allocated therein, a given calculation is iteratively performed to obtain a performance value Di (i = 1, 2, 3) for each of the level values in each of the design parameters (S22). Performance values D1, D2, D3 correspond, respectively, to the level values 1, 2, 3 assigned to each of the design parameters.

In this Step S22, fundamentally, a standard SN ratio-type calculation based on the Taguchi method is iteratively performed in the entire frequency range while setting an optimal level value obtained in each calculation, as a new standard value. The factor related to the pitching/rolling coupled degree is includes in this iterative calculation, and therefore the performance value Di is calculated as a performance value related to the pitching/rolling coupled degree. Although not included as a step in FIG. 6, a factorial effect diagram is created and displayed in conjunction with the calculation of the performance value Di. This factorial effect diagram will be specifically described later with reference to FIG. 7 showing one example thereof.

After Step S22, a combination of three level values providing an optimal performance values Di in each of the design parameters is extracted (S23) is extracted. That is, a combination of level values allowing each of the SN ratios to be maximized or allowing each of the sensitivities β1, β2, β3 to become closer to zero is extracted. Then, a design value is acquired for each of the extracted level values (S24). The design value means a design parameter value corresponding to one of the extracted level values which provides an optimal performance value in each of the design parameters.

Then, it is determined whether the design value acquired in Step S24 falls within a given range of a lower limit value Lmin to an upper limit value Lmax (S25). That is, it is determined whether the design value is adequate as a design parameter value to be set to a corresponding one of the #1, #3 and #4 engine mounts. If it is determined that the design value does not fall within the given range, i.e., is not adequate as a design parameter value, the design value is corrected to fall within the given range (S24), and then the process advances to Step S27. Differently, if it is determined that the design value falls within the given range, the process advances directly to Step S27. As a technique of the correction in Step S26, the design value is set to the upper limit value when it is greater than the upper limit value, or set to the lower limit value when it is less than the lower limit value. In Step S27, the design value is finally fixed. After completion of the above operations, the process is returned to the main routines in FIG. 4.

FIG. 7 is a factorial effect diagram to be created based on the performance value Di calculated in Step 22 illustrated in FIG. 6 and displayed on the display unit 7 (see FIG. 1). In this factorial effect diagram, SN ratios or sensitivities β1, β2, β3 related to the pitching/rolling coupled degree are set to the vertical axis thereof, and a polygonal line formed by connecting respective performance values D1, D2, D3 for the level values 1 to 3 is represented for each of the eighteen design parameters included in the table illustrated in FIG. 5. FIG. 7 shows polygonal lines for a part (H to M) of the design parameters.

Based on this factorial effect diagram, one of the level values providing an optimal performance value Di in each of the design parameters is extracted. In FIG. 7, the level value providing an optimal performance value Di in each of the design parameters is indicated in such a manner to be enclosed with a dashed circle. Specifically, the level value 2, the level value 1 and the level value 3 are extracted, respectively, for the design parameter H, the design parameter I and the design parameter J. Further, the level value 1, the level value 2 and the level value 1 are extracted, respectively, for the design parameter K, the design parameter L and the design parameter M. After the level value providing the optimal performance value Di in each of the design parameters, a design value, i.e., a design parameter value, for this level value is acquired, and fixed as a design parameter value directly or after the correction.

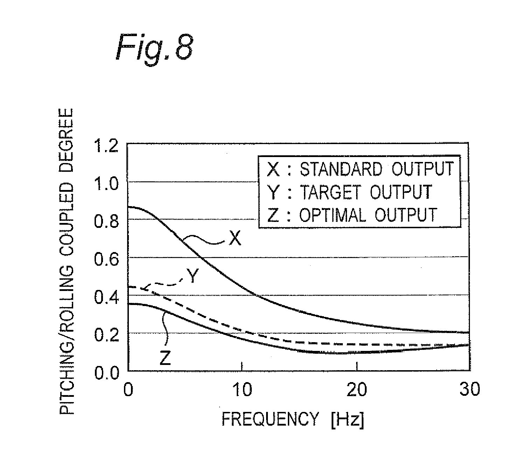

FIG. 8 is a graph showing an output characteristic related to the pitching/rolling coupled degree. In FIG. 8, a curve X (solid line) represents a standard output to be obtained when the level value corresponding to the performance value D2 is selected for each of the design parameters, and a curve Y (dashed line) represents a target output which is set to allow a suppressive effect of the pitching/rolling coupled degree to be exhibited in each of the design parameters. This target output is obtained by subjecting the pitching/rolling coupled degree to a frequency-dependent weighting in consideration of characteristics, such as idling vibration, acceleration shock and vehicle acceleration noise, in advance. When an optimal performance value Di is applied to the standard output or the target output in each of the design parameters, an optimal output appears as indicated by a curve Z (solid line). This makes it possible to effectively suppress the pitching/rolling coupled degree so as to achieve further enhanced noise/vibration characteristics.

In the factorial effect calculation subroutine illustrated in FIG. 6, the pitching/rolling coupled degree is suppressed only by employing an optimal performance value Di in each of the design parameters. However, in order to achieve the optimal output to be below the target output on a steady basis as shown in FIG. 8, it is desirable to execute a factorial effect calculation subroutine as shown in FIG. 9, in Step S16 illustrated in FIG. 4. In this subroutine, SN ratios or sensitivities β1, β2, β3 related to the pitching/rolling coupled degree are set as the vertical axis of the factorial effect diagram (S31). Then, a target value of the pitching/rolling coupled degree (target pitching/rolling coupled degree value) providing the target output is read out (S32). Subsequently, a performance value Di for each of the level values in each of the design parameters is calculated (S33), and a combination of level values providing an optimal performance value Di is extracted (S34). Further, from the combination of level values providing an optimal performance value Di, one level value providing a lower coupled degree than the target value read out in Step S32 is extracted (S35). For example, in the operation of extracting such a level value, a plurality of a plurality of cause-and-fact diagrams may be created in advance to allow one level value providing a lower coupled degree than the target value to be selected from a plurality of combinations of level values, Alternatively, if a combination of level values extracted once has no level value providing a lower coupled degree than the target value, another combination of level values may be extracted and compared with the target value.

After Step S35, a design value corresponding to each of the extracted level values is acquired (S36). Then, it is determined whether the design value falls within a given range (of Lmin to Lmax) (S37). If it is determined that the design value does not fall within the given range, the design value is corrected to fall within the given value (S38), and then the process advances to Step S39. Differently, if it is determined that the design value falls within the given range, the process advances directly to Step S39. In Step S39, the design value is fixed. After completion of the above operations, the process is returned to the main routines in FIG. 4.

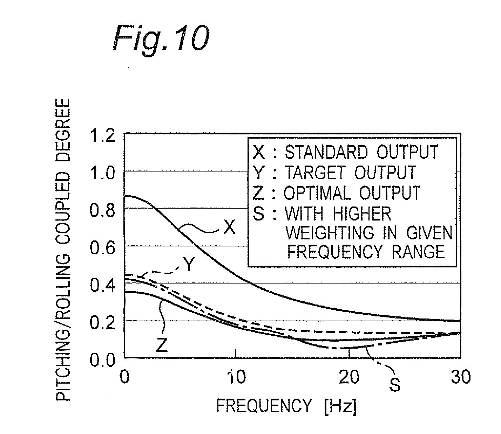

As to idling vibration took into account as one factor causing noise/vibration in the first embodiment, it is known that an adverse effect thereof becomes prominent around a frequency of 20 Hz. With a view to suppressing this adverse effect, a target output of the pitching/rolling coupled degree with a higher weighting in a frequency range around 20 Hz as indicated by the code S in FIG. 10 may be pre-set in the factorial effect calculation subroutine as shown in FIG. 9. In this manner, a higher weighting can be assigned to a given frequency range in consideration with the characteristic of a factor causing noise/vibration to improve the noise/vibration characteristics further effectively and reliably.

As above, in the first embodiment, the pitching/rolling coupled degree can be suppressed to provide enhanced noise/vibration characteristics.

### (SECOND EMBODIMENT)

In the above first embodiment, the pitching vibration system producing a pitching vibration about the lateral axis of the vehicle body and the rolling vibration system producing a rolling vibration about the engine crankshaft have been taken into account as factors causing deterioration in performance of the #1, #3 and #4 engine mounts related to noise/vibration characteristics. Heretofore, as another factor causing deterioration in performance of the #1, #3 and #4 engine mounts related to noise/vibration characteristics, there has also been known a vertical vibration system producing a vertical vibration (so-called "shaking") caused by a vibration due to a drive shaft affected by an imbalance between tires during vehicle running at a high speed, for example, greater than about 120 km. Further, it is known that the vertical vibration produced by the vertical vibration system has a relationship with the pitching vibration to induce a coupled phenomenon that they interact with each other while exchanging energy therebetween.

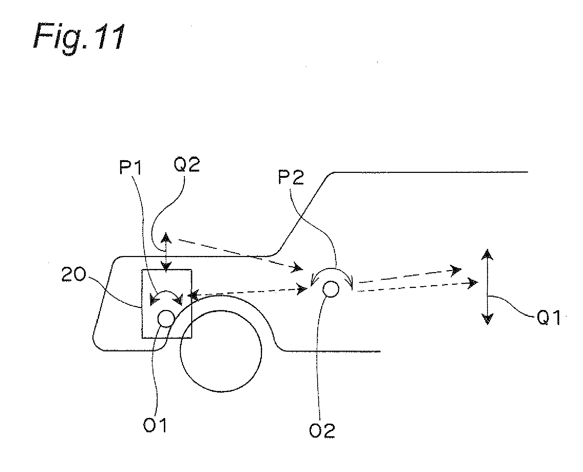

FIG. 11 is an explanatory diagram of pitching vibration, rolling vibration and vertical vibration which induce the coupled phenomenon. As shown in FIG. 11, the pitching vibration P2 interacts with the vertical vibration Q2 in addition to the rolling vibration P1. As with the pitching/rolling coupled degree, along with an increase in a degree of the coupled phenomenon between the pitching vibration P2 and the vertical vibration (hereinafter referred to as "pitching/vertical coupled degree"), a vertical vibration Q1 of the vehicle body will become larger, and the noise/vibration characteristics will be deteriorated. From this point of view, in the second embodiment, a design parameter value for each of the design parameters of the #1, #3 and #4 engine mounts related to the noise/vibration characteristics will be set while taking account of both the pitching/rolling coupled degree and the pitching/vertical coupled degree. In the second embodiment, unless otherwise specifically described, the same structure as that in the above embodiment is applied thereto.

Fundamentally, in the second embodiment, as the cause/factor calculation subroutine of Step S16 in FIG. 4, a different subroutine from that in the first embodiment, specifically, a subroutine for calculating respective causes/effects related to the pitching/rolling coupled degree and the pitching/vertical coupled degree individually and then analyzing then in a comprehensive manner, is executed.

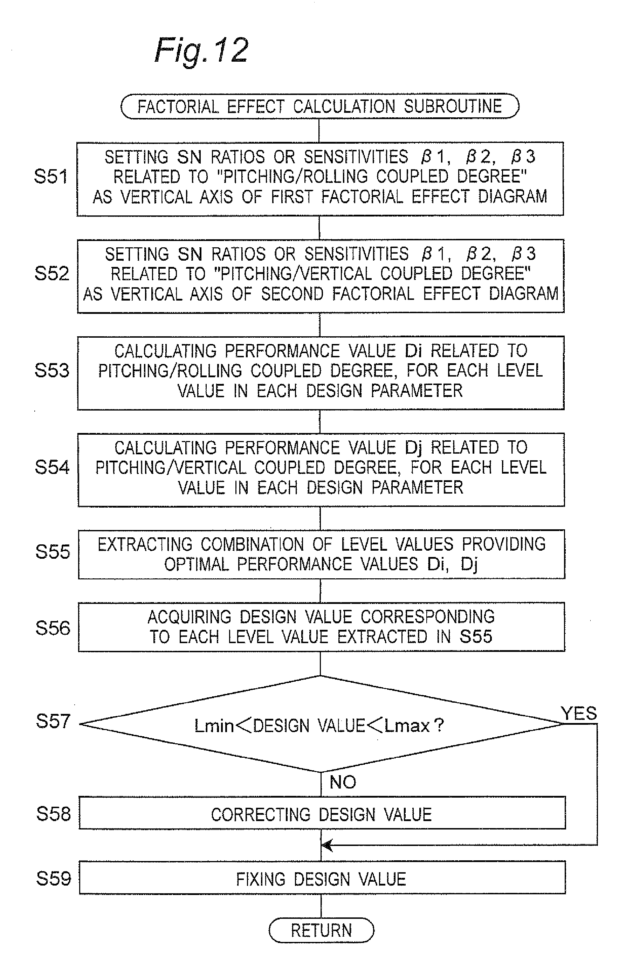

FIG. 12 is a flowchart showing a factorial effect calculation subroutine in the second embodiment, which corresponds to Step S16 illustrated in FIG. 4. In this subroutine, SN ratios or sensitivities β1, β2, β3 related to the pitching/rolling coupled degree are firstly set as the vertical axis of a first factorial effect diagram (S51). Further, SN ratios or sensitivities β1, β2, β3 related to the pitching/vertical coupled degree are set as the vertical axis of a second factorial effect diagram (S52). Then, a performance value Di (i = 1, 2, 3) related to the pitching/rolling coupled degree is calculated for each of the level values in each of the design parameters (S53). Further, a performance value Dj (j = 1, 2, 3) related to the pitching/vertical coupled degree is calculated for each of the level values in each of the design parameters (S54). Although not included as a step in FIG. 12, two factorial effect diagrams are created in conjunction with the calculations of the performance value Di and the performance value Dj individually, and displayed side-by-side on the display unit 7.

After Step S54, plural pairs of level values, respectively, providing an optimal performance value Di relates to the pitching/rolling coupled degree and an optimal performance value Dj related to the pitching/vertical coupled degree, are extracted (S55). Specifically, in this Step S55, plural pairs of level values, respectively, providing optimal performance values Di, Dj, are extracted, and then the pair of extracted level values providing the optimal performance values Di, Dj in each of the design parameters are compared with each other to select one of them (either one of the level values 1 to 3).

After Step S55, a design value is acquired for each of the extracted level values providing the optimal performance values Di, Dj in the design parameters (S56). Then, it is determined whether the design value acquired in Step S56 falls within a given range (of Lmin to Lmax) (S57). If it is determined that the design value does not fall within the given range, the design value is subsequently corrected to fall within the given range (S58), and then the process advances to Step S59. Differently, if it is determined that the design value falls within the given range, the process advances directly to Step S59. After completion of the above operations, the process is returned to the main routines in FIG. 4.

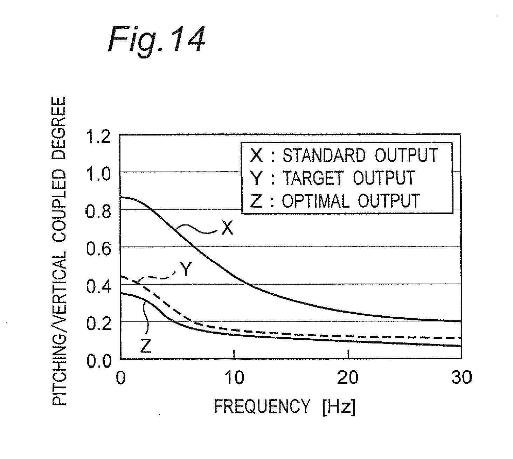

In the second embodiment, in conjunction with the calculations of the performance values Di, Dj in Steps S53 and S54 illustrated in FIG. 12, the first factorial effect diagram related to the pitching/rolling coupled degree as shown in FIG. 7 and the second factorial effect diagram related to the pitching/vertical coupled degree as shown in FIG. 13 are created individually, and displayed side-by-side on the display unit 7. In a factorial effect diagram as shown in FIG. 13, SN ratios or sensitivities β1, β2, β3 related to the pitching/vertical coupled degree are set to the vertical axis thereof, and a polygonal line formed by connecting respective performance values D1, D2, D3 for the level values 1 to 3 is represented for each of the eighteen design parameters included in the table illustrated in FIG. 5. FIG. 13 shows polygonal lines for a part (H to M) of the design parameters.

Based on this factorial effect diagram, one of the level values which provides an optimal performance value Dj in each of the design parameters is extracted. In FIG. 13, the level value providing an optimal performance value Dj in each of the design parameters is indicated in such a manner to be enclosed with a dashed circle. Specifically, the level value 2, the level value 1 and the level value 2 are extracted, respectively, for the design parameter H, the design parameter I and the design parameter J. Further, the level value 1, the level value 3 and the level value 1 are extracted, respectively, for the design parameter K, the design parameter L and the design parameter M.

As mentioned above in connection with Step S55 in FIG. 12, after the pairs of level values providing the optimal performance values Di, Dj are extracted, respectively, from the first factorial effect diagram related to the pitching/rolling coupled degree (see FIG. 7) and the second factorial effect diagram related to the pitching/vertical coupled degree (FIG. 13), the pair of extracted level values providing the optimal performance values Di, Dj are compared with each other in each of the design parameter values, to select one of the level values.

More specifically, as to a certain one of the design parameters, if the pair of level values, respectively, providing an optimal performance value Di and an optimal performance value Dj, are identical to each other, this level value is extracted. Differently, as to a certain one of the design parameters, if the pair of level values, respectively, providing an optimal performance value Di and an optimal performance value Dj, are different from each other, one of the level values is selected based on an interaction value indicative of a degree of variance in the respective level values between the performance values Di, Dj, or respective slopes of the polygonal lines represented on the factorial effect diagrams. For example, if the interaction is large, or the slopes of the polygonal lines are different from each other, the level value 2 will be selected. After either one of the level values which provides the optimal performance values Di, Dj is selected for each of the design parameters, a design value corresponding to each of the level values is acquired, and fixed as a design parameter value directly or after the correction.

FIG. 14 is a graph showing an output characteristic related to the pitching/rolling coupled degree and the pitching/vertical coupled degree. In FIG. 14, a curve X (solid line) represents a standard output to be obtained when the performance value D2 is used for each of the design parameters, and a curve Y (dashed line) represents a target output which is set to allow a suppressive effect of the pitching/rolling coupled degree and the pitching/vertical coupled degree to be exhibited in each of the design parameters. When an optimal performance value is applied to the standard output or the target output in each of the design parameters, an optimal output appears as indicated by a curve Z (solid line). This makes it possible to effectively suppress the pitching/rolling coupled degree and the pitching/vertical coupled degree so as to achieve further enhanced noise/vibration characteristics.

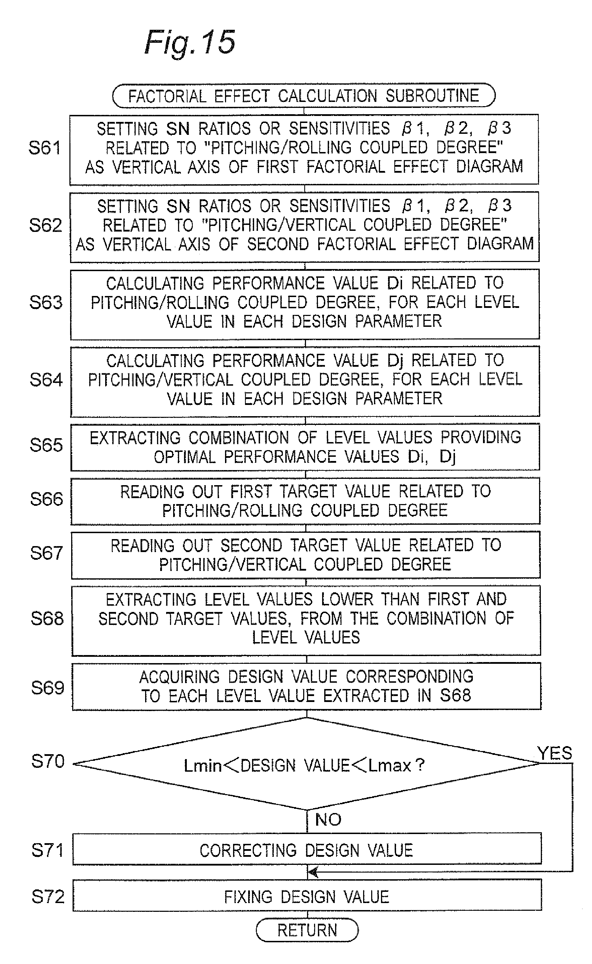

In the factorial effect calculation subroutine illustrated in FIG. 12, the pitching/rolling coupled degree and the pitching/vertical coupled degree is suppressed by employing an optimal performance value in each of the design parameters. However, in order to achieve the optimal output to be below the target output on a steady basis as shown in FIG. 14, it is desirable to execute a factorial effect calculation subroutine as shown in FIG. 15, in a step corresponding to Step S16 illustrated in FIG. 4.

FIG. 15 is a flowchart showing the factorial effect calculation subroutine in the second embodiment, which corresponds to Step S16 illustrated in FIG. 4, but differ from that illustrated in FIG. 12. In this subroutine, SN ratios or sensitivities β1, β2, β3 related to the pitching/rolling coupled degree are set as the vertical axis of a first factorial effect diagram (S61). Further, SN ratios or sensitivities β1, β2, β3 related to the pitching/vertical coupled degree are set as the vertical axis of a second factorial effect diagram (S62). Then, a performance value Di (i = 1, 2, 3) related to the pitching/rolling coupled degree is calculated for each of the level values in each of the design parameters (S63). Further, a performance value Dj (j = 1, 2, 3) related to the pitching/vertical coupled degree is calculated for each of the level values in each of the design parameters (S64).

After Step S64, plural pairs of level values, respectively, providing an optimal performance value Di relates to the pitching/rolling coupled degree and an optimal performance value Dj related to the pitching/vertical coupled degree, are extracted (S65). This Step S65 is performed in the same manner as Step S55 in FIG. 12. Then, a target value related to the pitching/rolling coupled degree (hereinafter referred to as "first target value") is read out (S66), and a target value related to the pitching/vertical coupled degree (hereinafter referred to as "second target value") is read out (S67).

Subsequently, from the respective pairs of level values providing the optimal performances, the level values providing a lower the pitching/rolling and pitching/vertical coupled degrees than the first and second target values are extracted (S68), and a design value corresponding to each of the extracted level values is acquired (S69). Then, it is determined whether the design value falls within a given range (of Lmin to Lmax) (S70). If it is determined that the design value does not fall within the given range, the design value is subsequently corrected to fall within the given range (S71), and then the process advances to Step S72. Differently, if it is determined that the design value falls within the given range, the process advances directly to Step S72. In Step 72, the design value is fixed as a design parameter value. After completion of the above operations, the process is returned to the main routines in FIG. 4.

As mentioned above in connection with the first embodiment with reference to FIG. 10, with a view to suppressing the adverse effect of idling vibration took into account as one factor causing noise/vibration, a target output of the pitching/rolling coupled degree with a higher weighting in a frequency range around 20 Hz may be pre-set in the factorial effect calculation subroutine as shown in FIG. 15. This makes it possible to further effectively improve the noise/vibration characteristics.

As above, in the second embodiment, the pitching/vertical coupled degree can be suppressed as well as the pitching/rolling coupled degree to provide further enhanced noise/vibration characteristics.

A display subroutine configured to display a factorial effect diagram in a different format from that in the second embodiment (see FIGS. 7 and 13) will be described below.

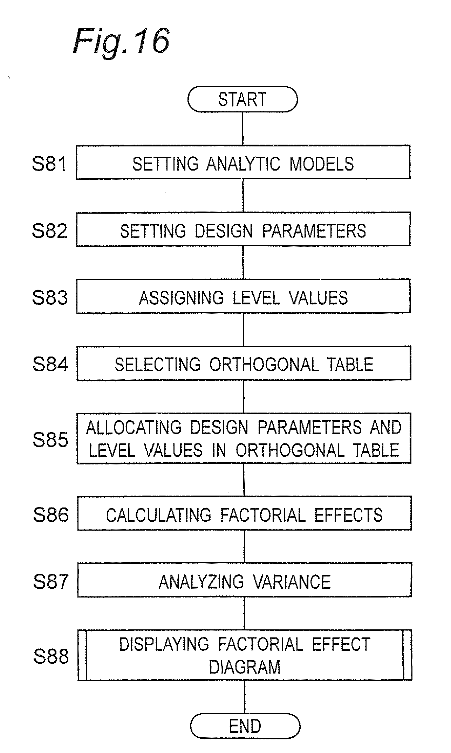

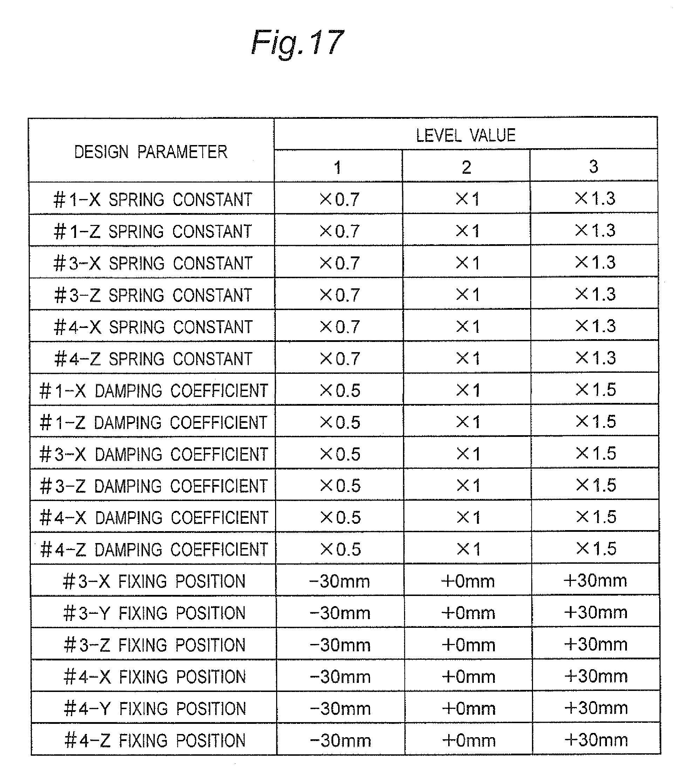

FIG. 16 is a flowchart showing a main routine of a product design process including a factorial-effect-diagram display step, to be executed in the product designing system 10. In this process, an analytic model (the #1, #3 and #4 engine mounts) is firstly set according to an input of a system operator (S81). Then, a plurality of design parameters of the #1, #3 and #4 engine mounts related to the noise/vibration characteristics are set up (S82), and a plurality (in the first embodiment, three) are assigned to each of the design parameters (S83). In this embodiment, three performances related to an idling vibration characteristic, an acceleration shock characteristic and a vehicle acceleration noise characteristic are taken into account as noise/vibration characteristics. The design parameters and the level values to be set and assigned in S82 and S83 will be described later with reference to FIG. 17.

After Step S83, an orthogonal table based on the Taguchi method is selected (S84). In this embodiment, an L54 orthogonal table is selected. Subsequently, the design parameters and the level values set and assigned in S82 and S83 are allocated in the orthogonal table (S85). Then, an analysis of L54 (control factor: design parameters) × L54 (error factor) where all of the design parameters have errors is performed to calculate factorial effects (S86). Specifically, in Step S86, a performance value Dji (= 1, 2, 3) for each of the idling vibration characteristic, the acceleration shock characteristic and the vehicle acceleration noise characteristic, is calculated with respect to each of the level values in each of the design parameters, based on a noise/vibration simulation function incorporated in an product designing program as one function thereof. In the performance value Dji, "i (= 1, 2, 3)" corresponds to the three characteristics (or performances), and "j (= 1, 2, 3)" corresponds to the three level values in each of the design parameters. The performance value Dji is an SN ratio obtained by performing a calculation in an iterative manner while setting an optimal level value obtained in each calculation, as a new standard value, and used as a vertical axis value of a factorial effect diagram. in this embodiment, an SN ratio obtained by iteratively performing a calculation, for example, ten times, is used as the performance value.

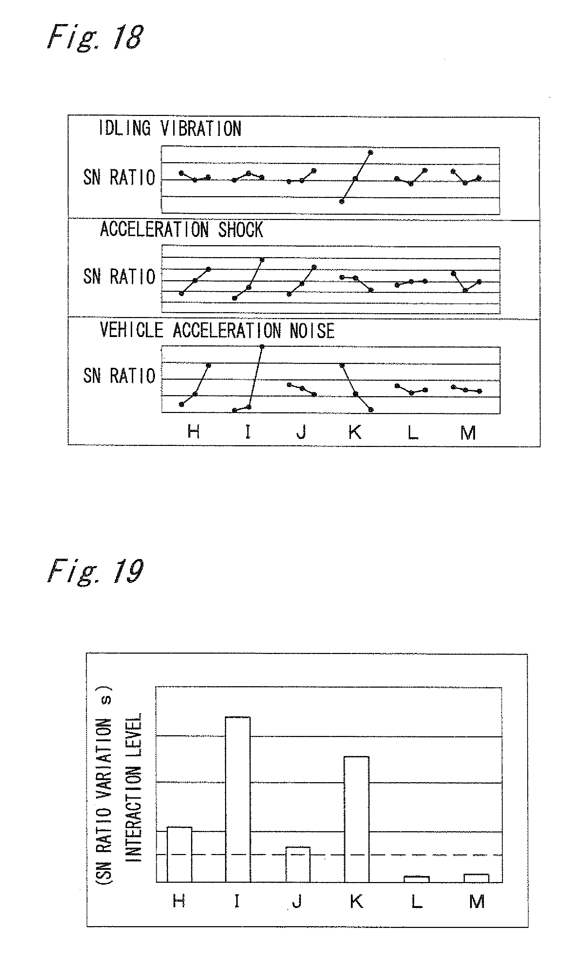

Then, an analysis of variance is performed to analyze a degree of variance between different characteristics associated with the performance value Dji for each of the level values in each of the design parameters (S87). Specifically, in Step 87, a characteristic interaction value P indicative of a degree of variance between a plurality of characteristics (level of characteristic interaction) associated with the performance value Dji for each of the level values in each of the design parameters is calculated. The characteristic interaction value P can be calculated for each factor on performance characteristics in the Taguchi method. In this embodiment, the interaction value is expressed for an SN ratio which is one of factors on performance characteristics. Based on the result of analysis in Step S87, a variance analysis chart (see FIG. 19) is created. After Step S87, data about a representation format of the factorial effect diagram is corrected according to need, and then the factorial effect diagram is displayed (S88). After completion of the above operations, all steps of the product design process including the factorial-effect-diagram display step is completed.

FIG. 17 is a table showing the plurality of design parameters related to the noise/vibration characteristics, and the level values assigned to each of the design parameters. In this embodiment, as a design parameter having a relation to the noise/vibration characteristics, the following total eighteen factors are set up: a spring constant in X, Z directions of the #1, #3 and #4 engine mounts [3 (the number of engine mounts) × 2 (the number of directions) = 6 (total number of spring constants)], a damping coefficient in X, Z directions of the #1, #3 and #4 engine mounts [3 (the number of engine mounts) × 2 (the number of directions) = 6 (total number of damping coefficients)] and a fixing position in X, Y Z directions of the #3 and #4 engine mounts [2 (the number of engine mounts) × 3 (the number of directions) = 6 (total number of fixing positions)]. Further, three level values 1 to 3 are set to each of these design parameters. The above X, Y, Z directions correspond, respectively, to directions indicated in FIGS. 2A to 2C.

More specifically, the level value 2 is a standard value in the level values 1 to 3, and the level value 1 and the level value 3 are, respectively, a smaller value and a larger value than the standard value. For example, as for the spring constants in X, Z directions of the #1, #3 and #4 engine mounts, "x 1" is set as the level value 2, and "x 0.7" and "x 1.3" are set, respectively, as the level value 1 and the level value 3. Further, as for the damping coefficients in X, Z directions of the #1, #3 and #4 engine mounts, "x 1" is set as the level value 2, and "x 0.5" and "x 1.5" are set, respectively, as the level value 1 and the level value 3. Furthermore, as for the fixing positions in X, Y Z directions of the #3 and #4 engine mounts, "+ 0 (zero) mm" is set as the level value 2, and "- 30 mm" and "+ 30 mm" are set, respectively, as the level value 1 and the level value 3.

The design parameters and the level values associated with each other as shown in FIG. 17 are allocated in the orthogonal table, and factorial effects are calculated as described in connection with Step S86 in FIG. 16. FIG. 18 is a factorial effect diagram to be created based on the result of the calculation of factorial effects. On the factorial effect diagram, the design parameters H to M each corresponding to any one of the eighteen parameters included in the table illustrated in FIG. 17 are arranged in such a manner to be separated based on the performances related to the idling vibration characteristic, the acceleration shock characteristic and the vehicle acceleration noise characteristic, and each represented by a polygonal line connecting three points of the performance value Dji corresponding to the respective level values 1 to 3.

Further, based on the calculation result of factorial effects, a variance analysis for analyzing the level of characteristic interaction is performed as described above in connection with Step S87 in FIG. 16. Then, based on the result of the variance analysis, a variance analysis chart (see FIG. 19) representing the level of characteristic interaction related to the design parameters is created. In FIG. 19, respective characteristic interaction values P of the design parameters H to M are represented by a bar graph, correspondingly to the factorial effect diagram in FIG. 18. In the bar graph, each bar is displayed to have a height which increases as the characteristic interaction value P becomes larger.

While the variance analysis chart illustrated in FIG. 19 allows the design parameter having a relatively large characteristic interaction to be distinguished from others, only visual analysis of the factorial effect diagram illustrated in FIG. 18 is not allowed to select one of the level values in each of the design parameters while taking into account of all of the characteristics. In this embodiment, data for representing the factorial effect diagram (factorial-effect-diagram representation data) can be corrected, as needed, in Step 88 in the flowchart of FIG. 16, to change a representation format of the factorial effect diagram so as to allow the design parameter having a relatively large characteristic interaction to be distinguished from others.

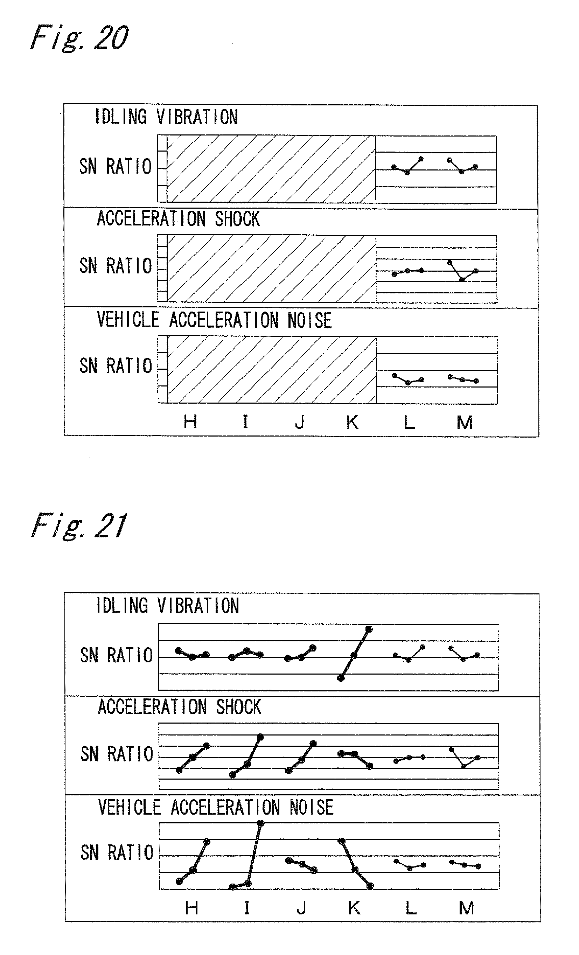

FIG. 20 is a first example of a factorial effect diagram based on corrected factorial-effect-diagram representation data in Step S88 illustrated in FIG. 16. In order to provide the factorial effect diagram in FIG. 20, in Step S88 illustrated in FIG. 16, a threshold (indicated by the dotted line in FIG. 19) is set relative to the respective characteristic interaction values of the design parameters, so that, when specific one or more of the design parameters H to K have a characteristic interaction value exceeding the threshold, factorial-effect-diagram representation data about the specific design parameters is precluded from being represented on the factorial effect diagram.

FIG. 21 is a second example of the factorial effect diagram based on the corrected factorial-effect-diagram representation data in Step S88 illustrated in FIG. 16. In order to provide the factorial effect diagram in FIG. 21, in Step S88 illustrated in FIG. 16, a threshold (indicated by the dotted line in FIG. 19) is set relative to the respective characteristic interaction values of the design parameters, so that, when specific one or more of the design parameters H to K have a characteristic interaction value exceeding the threshold, the specific design parameters are represented on the factorial effect diagram using a polygonal line which has a line thickness greater than that of a polygonal line of each of the remaining design parameters H to K having a characteristic interaction value equal to or less than the threshold.

While, in the above example, the specific design parameters H to K having a characteristic interaction value exceeding the threshold is represented by a thicker polygonal line, the present invention is not limited to such a manner, but the specific design parameters may be represented in any other suitable manner. For example, the polygonal line may be changed in color of or may be encircled with another line. Alternatively, the specific design parameters H to K having a characteristic interaction value exceeding the threshold may be normally represented, and the remaining design parameters H to K having a characteristic interaction value equal to or less than the threshold may be represented by a changed representation format.

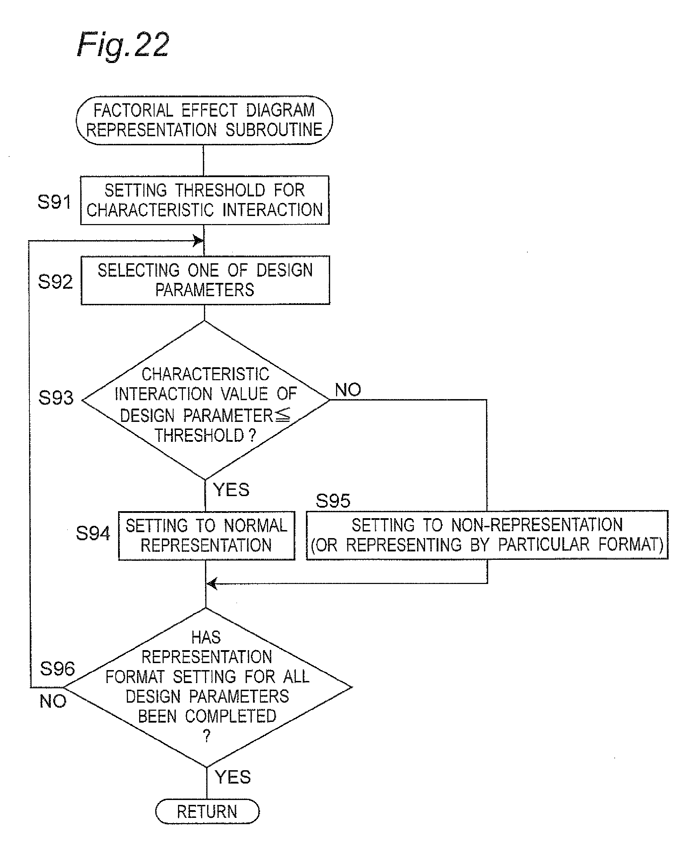

FIG. 22 is a flowchart showing a factorial-effect-diagram display subroutine for creating the first and second examples of the factorial effect diagram illustrated in FIGS. 20 and 21, which corresponds to Step S88 illustrated in FIG. 16. A threshold for characteristic interaction is firstly set up (S91). Then, one of the design parameters H to M is selected (S92).

Subsequently, it is determined whether a characteristic interaction value P related to the selected design parameter is equal to or less than the threshold (S93). If the characteristic interaction value P is determined to be equal to or less than the threshold, the representation format is set to represent the selected design parameter in the same manner as the design parameters L, M in FIGS. 20 and 21 (S94). If the characteristic interaction value P is determined to be greater than the threshold, the representation format is changed to represent the selected design parameter in a different manner, for example, such that the selected design parameter is precluded from being represented as in the design parameters H to K in FIGS. 20 and 21 or represented using a thicker line (S95).

After Steps S94 and S95, it is determined whether the representation format setting for all of the design parameters H to M has been completed (S96). If it is determined that the representation format setting has not been completed, the process returns to Step 92 to execute the subsequent steps for the residual design parameters. If it is determined that the representation format setting has been completed, the process returns to the main routine in FIG. 16.

As above, the design parameter having a characteristic interaction value P exceeding the threshold is represented by a different representation format, for example, such that the selected design parameter is precluded from being represented as in the design parameters H to K in FIGS. 20 and 21 or represented using a thicker line. Thus, a system operator can select design parameters achieving an adequate balance between a plurality of performance characteristics, readily and efficiently.

While the above embodiment has been described based on an engine mount design with a focus on three performances related to an idling vibration characteristic, an acceleration shock characteristic and a vehicle acceleration noise characteristic, the present invention is not limited to such a manner, but may be applied to cases where an engine mount is designed in consideration of only two performances related to an idling vibration characteristic and an acceleration shock characteristic or only two performances related to an idling vibration characteristic and a vehicle acceleration noise characteristic. In this case, the threshold for the characteristic interaction value P is set at a different value in response to changes in combination of the characteristics.

For example, in the engine mount design with a focus on three performances related to an idling vibration characteristic, an acceleration shock characteristic and a vehicle acceleration noise characteristic, the threshold is set at 10. In the engine mount design with a focus on two performances related to an idling vibration characteristic and an acceleration shock characteristic, the threshold is set at 8. Further, in the engine mount design with a focus on two performances related to an idling vibration characteristic and a vehicle acceleration noise characteristic, the threshold is set at 5. For example, the threshold is determined while reflecting a degree of interaction between the characteristics.

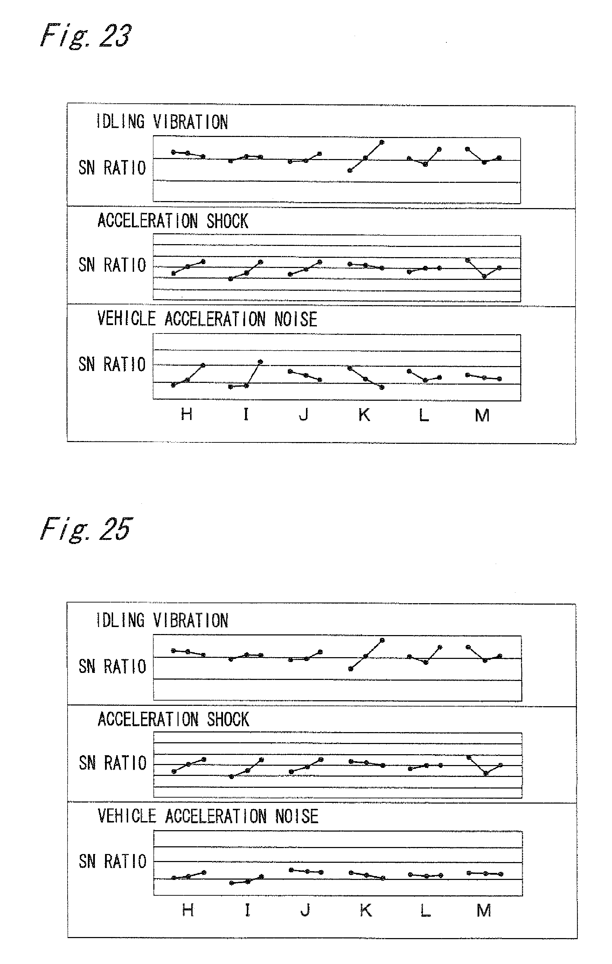

FIG. 23 is a third example of the factorial effect diagram based on the corrected factorial-effect-diagram representation data in Step S88 illustrated in FIG. 16. In order to provide the factorial effect diagram in FIG. 23, in Step S88 illustrated in FIG. 16, the performance value Dji, on the vertical axis of the factorial effect diagram, corresponding to each of the level values is corrected in such a manner as to become smaller as it has a larger characteristic interaction value P. Specifically, the correction is performed by adding up add an inverse of the characteristic interaction value P to the performance value Dji. As compared with the factorial effect diagram before the correction illustrated in FIG. 18, the factorial effect diagram illustrated in FIG. 23 allows a system operator to readily visually check that a variation in the performance value Dji of the design parameter (e.g. design parameter I or K) having a relatively large characteristic interaction value P is reduced. The correction of allowing the performance value Dji, on the vertical axis of the factorial effect diagram, corresponding, to each of the level values to become smaller as it has a larger characteristic interaction value P, may be performed by adding up a difference (K - P) between a fixed value and the characteristic interaction value P to the performance value Dji.

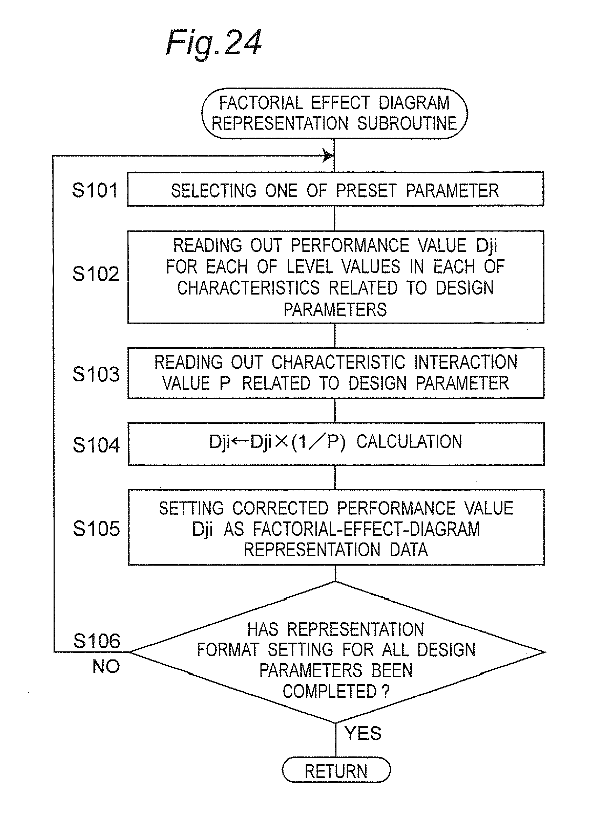

FIG. 24 is a flowchart showing a factorial-effect-diagram display subroutine for creating the third example of the factorial effect diagram illustrated in FIG. 23, which corresponds to Step S88 illustrated in FIG. 16. In this subroutine, one of the design parameters H to M is firstly selected (S101). Then, a previously calculated performance value Dji is read out for each of the level values of the selected design parameter (S102). Further, a previously calculated characteristic interaction value P is read out for the selected design value (S103).

Then, an inverse 1/P of the characteristic interaction value P is added up to the performance value Dji to correct the performance value Dji (S104). The corrected performance value Dji is set as factorial-effect-diagram representation data (S105). Subsequently, it is determined whether the representation format setting for all of the design parameters H to M has been completed (S106). If it is determined that the representation format setting has not been completed, the process returns to Step 101 to execute the subsequent steps for the residual design parameters. If it is determined that the representation format setting has been completed, the process returns to the main routine in FIG. 16.

As above, an inverse of the characteristic interaction value P is added up to the performance value Dji to correct the performance value Dji. As compared with the factorial effect diagram before the correction illustrated in FIG. 18, the factorial effect diagram illustrated in FIG. 23 allows a system operator to readily visually check that a variation in the performance value Dji of the design parameter having a relatively large characteristic interaction value P is reduced. Thus, the system operator can select design parameters achieving an adequate balance between a plurality of performance characteristics, readily and efficiently.

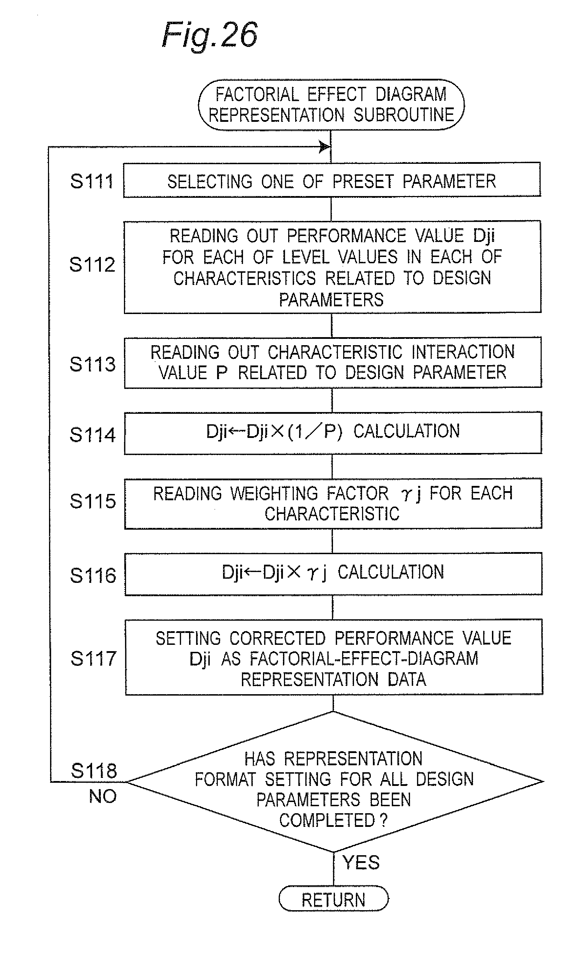

FIG. 25 is a fourth example of the factorial effect diagram based on the corrected factorial-effect-diagram representation data in Step S88 illustrated in FIG. 16. in order to provide the factorial effect diagram in FIG. 25, in Step S88 illustrated in FIG. 16, the performance value Dji, the performance value Dji, on the vertical axis of the factorial effect diagram, corresponding to each of the level values is corrected in such a manner as to become smaller as it has a larger characteristic interaction value P, as in the creation of the factorial effect diagram in the third example, and a weighting is assigned to the performance value Dji dependent on importance of said the respective characteristics.

Specifically, a weighting factor γ is pre-assigned to each of the characteristics. For example, a weighting factor γ1 = 2.0 is assigned to the performance related to the idling vibration characteristic, and a weighting factor γ2 = 1.5 is assigned to the performance related to the acceleration shock characteristic. Further, a weighting factor γ3 = 1.0 is assigned to the performance related to the vehicle acceleration noise characteristic. As compared with the factorial effect diagram before the correction illustrated in FIG. 18, the factorial effect diagram illustrated in FIG. 25 allows a system operator to readily visually check that a variation in the performance value Dji of the design parameter (e.g. design parameter I or K) having a relatively large characteristic interaction value P is smaller, and the performance value Dji is larger in order of importance.

FIG. 26 is a flowchart showing a factorial-effect-diagram display subroutine for creating the fourth example of the factorial effect diagram illustrated in FIG. 25, which corresponds to Step S88 illustrated in FIG. 16. In this subroutine, one of the design parameters H to M is firstly selected (S111). Then, a previously calculated performance value Dji is read out for each of the level values of the selected design parameter (S112). Further, a previously calculated characteristic interaction value P is read out for the selected design value (S113). Then, an inverse 1/P of the characteristic interaction value P is added up to the performance value Dji to correct the performance value Dji (S114).

Subsequently, a weighting factor γj (j = 1 to 3) for each of the characteristics is read out (S115). Then, the weighting factor γj is added up to the performance value Dji corrected at Step S114 to further correct the performance value Dji (116). Specifically, in Steps S114 and S115, the performance value Dji is subjected to the weighting using a product of the inverse 1/P of the characteristic interaction value P and the weighting factor γj for each of the characteristics. The performance value Dji corrected by Step S114 and S116 are set as factorial-effect-diagram representation data (S117).

Subsequently, it is determined whether the representation format setting for all of the design parameters H to M has been completed (S118). If it is determined that the representation format setting has not been completed, the process returns to Step 111 to execute the subsequent steps for the residual design parameters. If it is determined that the representation format setting has been completed, the process returns to the main routine in FIG. 16.

As above, the inverse 1/P of the characteristic interaction value P and the weighting factor γj for each of characteristics are added up to the performance value Dji to correct the performance value Dji. As compared with the factorial effect diagram before the correction illustrated in FIG. 18, the corrected factorial effect diagram (see FIG. 25) allows a system operator to readily visually check that a variation in the performance value Dji of the design parameter having a relatively large characteristic interaction value P is smaller, and the performance value Dji is larger. Thus, the system operator can select design parameters achieving an adequate balance between a plurality of performance characteristics, readily and efficiently.

While the performance value Dji in this embodiment has been subjected to the weighting using a product of the inverse 1/P of the characteristic interaction value P and the weighting factor γj for each of characteristics, the present invention is not limited to such a manner, but the weighting to the performance value Dji may be performed simply by adding up the weighting factor γj for each of characteristics to the performance value Dj.

Further, the factorial effect diagrams in FIGS. 18, 20, 21, 23 and 25 are designed to have a vertical axis indicative of an SN ratio related to "idling vibration characteristic", "acceleration shock characteristic" and "vehicle acceleration noise characteristic", the present invention is not limited to such a manner, but the factorial-effect-diagram display subroutine may also be applied to a factorial effect diagram having a vertical axis indicative of an SN ratio related to "pitching/rolling coupled degree" and "pitching/vertical coupled degree", as with the factorial effect diagrams in FIGS. 7 and 13.

The product design mainroutine or the factorial effect calculation subroutine illustrated in FIGS. 4, 6, 9, 12, 15, 16, 22, 24 and 26 is executed by reading out a program stored in the ROM 3 or the hard disk 5 included in the system 10. This program may be incorporated in a part of a program serving as a foundation of control to be performed by the CPU 2 of the system 10, or may be installed, as a product designing program, in the system 10, using an external recording medium, such as an optical disk including a CD-ROM and a DVD-ROM, or a floppy®disk, or through downloading via a network, and then additionally stored in the hard disk 5.

While the present invention is not limited to the above embodiments illustrated by an example, but it is understood that various modifications and changes may be made therein without departing from the spirit and scope of the invention.

## Claims

1. A product designing system for designing a given product while setting a design parameter value for each of a plurality of design parameters of said product each contributing to noise and vibration characteristics of an installation base for said product, comprising:
vibration-system setting means for setting a plurality of vibration systems related, respectively, to said noise and vibration characteristics, and formed as at least one vibration system pair inducing a coupled phenomenon that they vibrate while exchanging energy therebetween;
coupled-degree calculation means for calculating a coupled degree representing a degree of said coupled phenomenon between respective vibrations in the vibration system pair set by said vibration-system setting means; and
design-parameter setting means for setting a plurality of design parameters of said product contributing to said noise and vibration characteristics, and setting a design parameter value for each of said design parameters in such a manner as to reflect the coupled degree calculated by said coupled-degree calculation means thereto.

2. The product designing system as defined in claim 1, wherein said design-parameter setting means is adapted to set said design parameter value in such a manner as to correspond to a minimum one of a plurality of coupled degrees calculated by said coupled-degree calculation means.

3. The product designing system as defined in claim 1 or 2, wherein said design-parameter setting means is adapted to set said design parameter value in such a manner as to fall with a given range.

4. The product designing system as defined in any of claims 1 to 3, wherein said design-parameter setting means is adapted to set said design parameter value in such a manner as to correspond to a coupled-degree value less than a predetermined target coupled-degree value of the coupled degree between respective vibrations in said vibration system pair.

5. The product designing system as defined in claim 4, wherein said target coupled-degree value is subjected to a frequency-dependent weighting.

6. The product designing system as defined in claim 5, wherein said target coupled-degree value is determined with a higher weighting in a given frequency range.

7. The product designing system as defined in any of claims 1 to 6, wherein:
said product is an engine mount for supportingly mounting an engine thereon relative to a vehicle body; and
said vibration-system setting means is adapted to set, as said vibration systems to be formed as a plurality of said vibration system pairs each inducing said coupled phenomenon, a pitching vibration system producing a pitching vibration about an axis in a lateral direction of the vehicle body, a rolling vibration system paired with said pitching vibration system to produce a rolling vibration about an engine crankshaft, and a vertical vibration system paired with said pitching vibration system to produce a vertical vibration in a vertical direction of the vehicle body.

8. The product designing system as defined in claim 7, wherein said noise and vibration characteristics consist of an idling vibration characteristic, an acceleration shock characteristic, a vehicle acceleration noise characteristic and a shaking characteristic.

9. The product designing system as defined in claim 7 or 8, wherein said design parameters consist of a spring constant, a fixing position and an inclination angle of said engine mount.

10. The product designing system as defined in any of claims 1 to 6, wherein:
said product is an engine mount for supportingly mounting an engine thereon relative to a vehicle body; and
said vibration-system setting means is adapted to set, as said vibration systems to be formed as a plurality of said vibration system pairs each inducing said coupled phenomenon, a pitching vibration system producing a pitching vibration about an axis in a lateral direction of the vehicle body, and a rolling vibration system paired with said pitching vibration system to produce a rolling vibration about an engine crankshaft.

11. The product designing system as defined in claim 10, wherein said noise and vibration characteristics consist of an idling vibration characteristic, an acceleration shock characteristic and a vehicle acceleration noise characteristic.

12. The product designing system as defined in claim 10 or 11, wherein said design parameters consist of a spring constant, a fixing position and an inclination angle of said engine mount.

13. The product designing system as defined in any of claims 1 to 12, which further includes:
level-value assignment means for assigning a plurality of level values to each of said design parameters set by said design-parameter setting means;
allocation means for allocating the design parameters set by said design-parameter setting means and the level values assigned by said level-value assignment means, into a given orthogonal table;
performance-value calculating means for calculating a performance value for each of said characteristics, with respect to each of said level values in each of said design parameters, according to said orthogonal table having the design parameters and the level values allocated therein by said allocation means;
interaction-degree calculation means for calculating a degree of interaction between two or more of said characteristics related to each of said design parameters; and
representation-format change means for changing a representation format to be represented on a factorial effect diagram having a vertical axis indicative of said performance values calculated with respect to each of said level values in each of said design parameters, in such a manner as to reflect said characteristic interaction degree calculated by said interaction-level calculation means.

14. The product designing system as defined in claim 13, wherein said representation-format change means is operable, when said characteristic interaction level in specific one or more of said design parameters exceeds a given threshold, to preclude the performance value for each of the level values in each of said specific design parameters from being represented on said factorial effect diagram.

15. The product designing system as defined in claim 13, wherein said representation-format change means is operable, when said characteristic interaction level in specific one or more of said design parameters exceeds a given threshold, to allow the performance value for each of said level values in each of said specific design parameters to be represented on said factorial effect diagram in a representation format different from that of the performance value for each of the design parameters in the remaining design parameters.

16. The product designing system as defined in claim 14 or 15, wherein said threshold of said characteristic interaction level is set for each of a plurality of combinations of said characteristics.

17. The product designing system as defined in claim 13, wherein said representation-format change means is adapted to subject the performance value for each of said level values in each of said design parameters to a weighting using a weighting factor which decreases along with an increase in the level of interaction between said characteristics related to said design parameter.

18. The product designing system as defined in claim 13, wherein said representation-format change means is adapted to subject the performance value for each of said level values in each of said design parameters to a weighting using a weighting factor dependent on importance of said respective characteristics.

19. The product designing system as defined in claim 13, wherein said representation-format change means is adapted to subject the performance value for each of said level values in each of said design parameters to a weighting using a product of a weighting factor which decreases along with an increase in the level of interaction between said characteristics related to said design parameter, and a weighting factor dependent on importance of said respective characteristics.

20. A product designing method for use in a product designing system for designing a given product while setting a design parameter value for each of a plurality of design parameters of said product each contributing to noise and vibration characteristics of an installation base for said product, comprising:
setting a plurality of vibration systems related, respectively, to said noise and vibration characteristics, and formed as at least one vibration system pair inducing a coupled phenomenon that they vibrate while exchanging energy therebetween;
calculating a coupled degree representing a degree of said coupled phenomenon between respective vibrations in said set vibration system pair; and
setting a plurality of design parameters of said product contributing to said noise and vibration characteristics, and setting a design parameter value for each of said design parameters in such a manner as to reflect said calculated coupled degree thereto.

21. A computer-readable recording medium having recorded thereon a product designing program for allowing a product designing system for designing a given product while setting a design parameter value for each of a plurality of design parameters of said product each contributing to noise and vibration characteristics of an installation base for said product, to execute procedures comprising:
setting a plurality of vibration systems related, respectively, to said noise and vibration characteristics, and formed as at least one vibration system pair inducing a coupled phenomenon that they vibrate while exchanging energy therebetween;
calculating a coupled degree representing a degree of said coupled phenomenon between respective vibrations in said set vibration system pair; and
setting a plurality of design parameters of said product contributing to said noise and vibration characteristics, and setting a design parameter value for each of said design parameters in such a manner as to reflect said calculated coupled degree thereto,
